(19) Europäisches Patentamt

European Patent Office

Office européen des brevets

(11) Veröffentlichungsnummer: **0 332 917**

**A2**

(12) # EUROPÄISCHE PATENTANMELDUNG

(21) Anmeldenummer: **89103442.3**

(22) Anmeldetag: **28.02.89**

(51) Int. Cl.⁴: **C08G 14/08 , C08L 61/04 , C08L 61/20**

(30) Priorität: **07.03.88 DE 3807403**

(43) Veröffentlichungstag der Anmeldung:
**20.09.89 Patentblatt 89/38**

(84) Benannte Vertragsstaaten:
**AT BE CH DE FR IT LI NL SE**

(71) Anmelder: **BASF Aktiengesellschaft**
**Carl-Bosch-Strasse 38**
**D-6700 Ludwigshafen(DE)**

(72) Erfinder: **Schmidt-Hellerau, Christof**
**Rheinrugenstrasse 45**
**D-6700 Ludwigshafen(DE)**
Erfinder: **Weber, Engelbert**
**Neubergstrasse 45**
**D-6730 Neustadt(DE)**
Erfinder: **Matthias, Günther, Dr.**
**Meergartenweg 25a**
**D-6710 Frankenthal(DE)**

(54) **Verfahren zur Herstellung von wässrigen Aminoharz-Lösungen für formaldehydarme Flächenverleimungen.**

(57) Die vorliegende Erfindung betrifft ein Verfahren zur Herstellung von wäßrigen Aminoharz-Lösungen für formaldehydarme Flächenverleimungen auf Basis von Kondensationsprodukten aus Melamin, Harnstoff, Formaldehyd und einem Phenol-Formaldehyd-Alkalisulfit-Kondensationsprodukt mit einem Molverhältnis von 1,4 bis 1,8 mol Formaldehyd, 0,04 bis 0,1 mol Melamin, 0,015 bis 0,04 mol Phenol und 0,002 bis 0,005 mol Alkalisulfit oder Alkalihydrogensulfit sowie gegebenenfalls 0,02 bis 0,04 mol eines 1- oder 2-wertigen Alkohols pro mol Harnstoff, bezogen auf die Gesamtmenge des Aminoharzes, die wäßrige Aminoharz-Lösung selbst sowie deren Anwendung.

EP 0 332 917 A2

## Verfahren zur Herstellung von wäßrigen Aminoharz-Lösungen für formaldehydarme Flächenverleimungen

Die vorliegende Erfindung betrifft ein Verfahren zur Herstellung von wäßrigen Aminoharz-Lösungen für formaldehydarme Flächenverleimungen auf Basis von Kondensationsprodukten aus Melamin, Harnstoff, Formaldehyd und ein Phenol-Formaldehyd-Natriumsulfit-Kondensationsprodukt mit einem Molverhältnis von 1,4 bis 1,8 mol Formaldehyd, 0,04 bis 0,1 mol Melamin, 0,015 bis 0,04 mol Phenol und 0,002 bis 0,005 mol Alkalisulfit oder Alkalihydrogensulfit pro mol Harnstoff, bezogen auf die Gesamtmenge des Aminoharzes, die wäßrige Aminoharz-Lösung selbst sowie deren Anwendung.

Wäßrige Aminoharz-Lösungen auf Basis von Melamin-Harnstoff-Phenol- und Formaldehyd-Kondensationsprodukten zur Verwendung als Leimharze sind seit langem bekannt. So wird in der DE-C-20 20 481 ein Verfahren zur Herstellung derartiger Harzlösungen beschrieben, das dadurch gekennzeichnet ist, daß zunächst aus Melamin und/oder Harnstoff mit Formaldehyd eine Kondensatlösung hergestellt wird, die dann mit Phenol und gegebenenfalls Formaldehyd und Melamin weiter umgesetzt wird.

Der Hauptnachteil dieser Harzlösungen besteht darin, daß sie nach dem Aushärten leicht Formaldehyd abgeben, was unerwünscht ist. Weiterhin ist die Lagerfähigkeit der Harzlösungen begrenzt.

In der EP-B-00 69 267 wird ein Verfahren zur Herstellung wäßriger Lösungen von Kondensationsprodukten aus Melamin, Harnstoff, Phenol und Formaldehyd beschrieben, wobei zunächst ein Phenol-Formaldehyd-Kondensat unter Mitverwendung von Alkalisulfit oder Hydrogensulfit und ein Harnstoff-Formaldehyd-Kondensat hergestellt werden, die gemeinsam mit Melamin und Formaldehyd weiter umgesetzt werden mit gegebenenfalls weiterer Kondensation mit Harnstoff.

Diese Harzlösungen weisen eine verbesserte Wasserverdünnbarkeit auf und setzen bei der Verarbeitung weniger Formaldehyd frei verglichen mit dem Stand der Technik. Aber die Formaldehydabgabe des fertigen Holzkörpers sowie die Lagerstabilität der Harzlösungen sind für manche Anwendungen nicht ausreichend.

Aufgabe der vorliegenden Erfindung war es wäßrige Aminoharz-Lösungen für Flächenverleimung zur Verfügung zu stellen mit guter Lagerstabilität, hoher Reaktivität sowie geringer Formaldehydabgabe sowohl beim Gebrauch als auch aus dem fertigen Wirkstoff.

Weitere Aufgaben der Erfindung waren die Bereitstellung von für die Flächenverleimung relativ hochviskosen Harzlösungen, die nach der Flächenverleimung von Holzteilen Formteile ergeben mit gutem Festigkeitsniveau, hoher Elastizität und guter Wasserfestigkeit.

Überraschenderweise wurde gefunden, daß diese sich teilweise widersprechenden Aufgaben mit Aminoharz-Lösungen gelöst werden, die entweder durch Kondensation von Harnstoff und Formaldehyd mit einem Melaminharnstoff-Formaldehyd-Vorkondensats und Mischen dieses Reaktionsgemisches mit einem Phenol-Formaldehyd-Alkalisulfit-Kondensationsprodukt oder gemeinsamer Kondensation dieser drei Harze hergestellt werden können, wobei begrenzte Molverhältnisse der Einzelkomponenten eingehalten werden müssen. Vorteilhaft kann man dabei auch Alkohole, Mono- oder Dialkohole einbauen.

Gegenstand der vorliegenden Erfindung ist ein Verfahren zur Herstellung von wäßrigen Aminoharzlösungen für formaldehydarme Flächenverleimungen auf Basis von Kondensationsprodukten aus Melamin, Harnstoff, Formaldehyd und einem Phenol-Formaldehyd-Alkalisulfit-Kondensationsprodukt mit einem Molverhältnis von 1,4 bis 1,8 mol Formaldehyd, 0,04 bis 0,1 mol Melamin, 0,015 bis 0,04 mol Phenol und 0,002 bis 0,005 mol Alkalisulfit oder Hydrogensulfit pro mol Harnstoff, bezogen auf die Gesamtmenge des Aminoharzes, dadurch gekennzeichnet, daß man

I Harnstoff und Formaldehyd oder Harnstoff und ein Harnstoff-Formaldehyd-Vorkondensat

A) mit einem Melamin-Harnstoff-Formaldehydkondensationsprodukt bei pH-Werten von 4,5 bis 6,5, bei Temperaturen von 70 bis 100 °C und Reaktionszeiten von 0,3 bis 1 Stunden bis zu einer Viskosität von 800 bis 1200 mPa·s, bezogen auf eine 65 gew.%ige Lösung, kondensiert, die Lösung durch Abdampfen von Wasser auf 60 bis 70 Gew.% aufkonzentriert,

B) und mit einem Phenol-Formaldehyd-Alkalisulfit-Kondensationsprodukt bei Raumtemperatur mischt oder

II Harnstoff und Formaldehyd oder Harnstoff und ein Harnstofformaldehyd-Vorkondensat mit A) und B) bei pH-Werten von 4,5 bis 6,5, bei Temperaturen von 70 bis 100 °C und Reaktionszeiten von 0,3 bis 1 Stunden bis zu einer Viskosität von 800 bis 1200 mPa·s, bezogen auf eine 65 gew.%ige Lösung, kondensiert und die Lösungs durch Abdampfen von Wasser auf 60 bis 70 Gew.% aufkonzentriert.

Zu den Aufbaukomponenten ist im einzelnen folgendes Auszuführen:

Die Aufbaukomponente (A) ist erhältlich durch Kondensation einer Mischung aus Melamin, Harnstoff und Formaldehyd mit Molanteilen, bezogen auf 1 mol Harnstoff, von 1,6 bis 2,5 mol Melamin und 4 bis 6 mol Formaldehyd. Ein derartiges Harz kann man beispielsweise erhalten, indem man zunächst Harnstoff und Formaldehyd bei pH 3 bis 6,5 kondensiert und bei pH 7 bis 10 unter Zusatz von Melamin bis zur gewünschten Viskosität weiterkondensiert. Die Viskositäten der Komponente (A) liegen für eine 65 gew.%ige Lösung bei 700 bis 900 mPa·s. Sie weist Feststoffgehalte von 60 bis 70 Gew.% auf. Die Komponente (A), die im Mittel 40 % (Bereich 35 bis 45 %) Melamin enthält wird in solcher Menge eingesetzt, daß der gewünschte Melamingehalt im Endharz erhalten wird. Die Rechnung ist einfach auszuführen.

Die Komponente (B) ist erhältlich durch Kondensation von Phenol mit Formaldehyd in Gegenwart von Alkalisulfit bzw. Hydrogensulfit wie beispielsweise Natriumsulfit oder Natriumhydrogensulfit. So werden beispielsweise eine wäßrige Formaldehydlösung, Phenol und Natriumsulfit unter Rühren auf 60°C aufgeheizt, wobei sich das Natriumsulfit löst. Nach Abklingen der exothermen Reaktion wird das Reaktionsgemisch bei 90°C bis zur gewünschten Viskosität gerührt. Die Molverhältnisse Phenol zu Formaldehyd zu Alkalisulfit oder Alkalihydrogensulfit betragen 1:1,7 bis 2,3 bzw. 0,1 bis 0,15, bevorzugt 1:1,9 bis 2,1 bzw. 0,1 bis 0,12. Der Feststoffgehalt der Komponente (B) beträgt 55 bis 65 Gew.% und die Viskositäten, bezogen auf einen Feststoffgehalt von 59 Gew.%, liegen zwischen 250 bis 500 mPa·s.

Die Komponente (B) wird in solchen Mengen eingesetzt, daß der gewünschte Phenolgehalt im Endharz erhalten wird. Die Rechnung ist einfach auszuführen.

Die Herstellung der wäßrigen Aminoharzlösung kann nach zwei Verfahren erfolgen. Bei der ersten Verfahrensvariante (I) werden zunächst 75 bis 90 Gew.%, bevorzugt 80 bis 88 Gew.% einer Mischung von entweder Formaldehydlösung (ca. 40 gew.%ig) und Harnstoff und Formaldehyd-Harnstoffvorkon densatlösung (ca. 75 gew.%ig) und Harnstoff im Gesamtmolverhältnis Harnstoff zu Formaldehyd von 1:1,0 bis 1:1,5, bevorzugt 1:1,3 bis 1:1,5 mit 10 bis 12 Gew.% der Komponente A und ca. 1 Gew.% Ethylenglykol zusammen kondensiert. Dabei wird ein pH-Bereich von 4,5 bis 6,5, zweckmäßig 5 bis 6, eine Temperatur von 70 bis 100°C, bevorzugt 80 bis 90°C, eingehalten. Die Kondensation wird bis zu einer Viskosität von 800 bis 1200 mPa·s, bezogen auf eine Lösung von 65 Gew.% Trockengehalt ausgeführt. Man kann als Endpunkt auch die Trübungstemperatur einer 1:5 verdünnten Lösung bei ca. 28°C wählen. Zur Endeinstellung des Harzes werden ca. 20 Gew.% Wasser abdestilliert, damit ein Trockengehalt von 60 bis 70 Gew.%, bevorzugt um 65 Gew.% erreicht wird. Dieses Kondensat wird mit 4 bis 5 Gew.% Komponente B) bei Raumtemperatur gemischt. Der Anteil dieser Phenol-Formaldehyd-Sulfit-Komponenten ergibt sich aus der Höhe der beabsichtigten Phenolmodifizierung. Der Abfall der Viskosität durch die Zumischung einer geringer viskosen Harzlösung ist bei den hier vorkommenden geringen Anteilen praktisch vernachlässigbar.

Bei der zweiten Verfahrensvariante (II) wird die Komponente (B) mit kondensiert. Beispielsweise kondensiert man wie bei der ersten Variante Harnstoff und Formaldehyd mit (A) zu einem Harz, das dann mit (B) bei pH-Werten von 5 bis 6, bei Temperaturen von 70 bis 100°C bis zu einer Viksosität, bezogen auf eine 65 gew.%ige Lösung von 800 bis 1200 mPa·s weiterkondensiert wird.

Bevorzugt ist aber die erste Verfahrensvariante, da mit den Aminoharzlösungen Holz-Verklebungen erzielt werden, deren IW 67-Aufstechwerte denen nach der zweiten Verfahrensvariante hergestellten überlegen sind.

Die Gewichtsverhältnisse der Komponenten (A) und (B) werden so gewählt, daß, bezogen auf die Gesamtmenge des Aminoharzes, pro mol Harnstoff 1,5 bis 1,8 mol, bevorzugt 1,6 bis 1,8 mol Formaldehyd, 0,04 bis 0,1 mol, bevorzugt 0,05 bis 0,08 mol Melamin, 0,015 bis 0,04, bevorzugt 0,02 bis 0,03 mol Phenol, 0,002 bis 0,005 und Alkalisulfit oder Alkalihydrogensulfit verwendet werden.

Die wäßrigen Aminoharzlösungen weisen Feststoffgehalte von 60 bis 80 Gew.%, bevorzugt 60 bis 70 Gew.% und Viskositäten, bezogen auf eine 65 gew.%ige Lösung, von 800 bis 1200 mPa·s, auf. Die Gelierzeiten liegen zwischen 40 und 60 s, gemessen bei 100°C unter Zusatz von 0,75 Gew.% Ammoniumchlorid.

Diese wäßrigen Aminoharzlösungen weisen eine geringe Formaldehydemission sowohl beim Gebrauch als auch aus den mit daraus hergestellten Holzwerk stoffen auf. Die Lagerbeständigkeit, definiert als Zeit in Wochen bis zur maximalen Viskosität von 2500 mPa·s nach Lagerung bei 25°C, ist gut und beträgt 15 bis 40 Wochen. Sie eignen sich hervorragend als Leimharze für die Flächenverleimung von allen Holzarten. Dabei wird das für die Norm IW 67 erforderliche Festigkeitsniveau, auch z.B. schwerverleimbarer Buchenfurniere überschritten. Die Norm IW 67 beinhaltet, daß das furnierte Werkstück nach 3stündigem Wässern bei 67°C beim Aufstichtest mit dem Messer keine Fugentrennungen aufweisen darf. Mit diesen Aminharz-Lösungen lassen sich neben Verleimungen auch Flächen von Holzteilen zu lackglänzenden Oberflächen lackieren. Hierfür und für die Flächenverleimung ist eine gute Elastizität erforderlich, da beispielsweise Latten für Bettroste oder Stuhllehnen Biegebeanspruchungen unterworfen sind.

3

Der Aminoharz-Lösung können noch die für die Leimharzherstellung üblichen Additive wie Härter, Füllstoffe, Streckmittel und Hilfsmittel zur Erzielung von Kaltklebrigkeit in Mengen bis zu 20 Gew.% zugesetzt werden.

Beispiel 1:

In Beispiel 2 und 3 verwendete Vorkondensate

## 1. Vorkondensate

In den Beispielen wurden zwei verschiedene Vorkondensate, ein Melamin-Harnstoff-Formaldehyd-Vorkondensat und ein Phenol-Formaldehyd-Sulfit-Vorkondensat, verwendet. Diese wurden wie folgt hergestellt:

### 1.1 Melamin-Harnstoff-Formaldehyd-Vorkondensat = Harz A

3843 g eines Harnstoff-Formaldehyd-Vorkondensates mit 25 Gew.% Harnstoff, 50 Gew.% Formaldehyd und 25 Gew.% Wasser, 1704 g 40 gew.%ige Formaldehydlösung, 18 g 25 gew.%ige Natronlauge, 4410 g Melamin und 960 g Wasser wurden zusammengegeben. Dann wurde bei pH 9,8 bis 10 ca. 1 h bei 95 bis 98°C kondensiert, bis die Viskosität 800 bis 1000 mPa•s, gemessen bei 20°C, betrug. Die abgekühlte Lösung hatte einen Feststoffgehalt von ca. 67 Gew.%, einen Methylolgehalt von 18 bis 20 Gew.% und einen freien Formaldehydgehalt von 0,2 bis 0,3 Gew.%. In die Lösung gingen 40,3 Gew.% Melamin, 23,8 Gew.% Formaldehyd und 8,8 Gew.% Harnstoff ein.

### 1.2 Phenol-Formaldehyd-Sulfit-Vorkondensat = Harz B

4055 g einer 40 gew.%igen Formaldehydlösung und 2542 g Phenol wurden gemischt. Dieser Lösung wurden 450 g Natriumsulfit zugefügt. Die Temperatur wurde langsam auf 100°C gesteigert. Nach 10 Minuten wurde auf 90°C gekühlt und die Kondensation weitergeführt, bis eine Viskosität von 250 mPa•s erreicht war. Der pH-Wert lag bei 9,0 bis 9,4. Der Trockengehalt betrug 59 Gew.%. In die Lösung gingen 36,1 Gew.% Phenol, 23 Gew.% Formaldehyd und 6,4 Gew.% Natriumsulfit ein.

## 2. Verfahrensvariante I

1190 g 40 gew.%ige Formaldehydlösung, 1428 g Harnstoff-Formaldehyd-Vorkondensat (wie in Beispiel 1.1 beschrieben), 1141 g 68 gew.%ige Harnstofflösung, 43 g Ethandiol-1,2 und 603 g Harz A wurden gemischt und auf pH 7,3 eingestellt. Dann wurde auf 80°C geheizt und die Mischung 10 Minuten bei dieser Temperatur gehalten. Dann wurde mit Ameisensäure ein pH-Wert von 5,4 eingestellt und bei diesem pH-Wert bis zu einer Trübungstemperatur einer 1:5 verdünnten Lösung von 28°C kondensiert. Danach wurden weitere 776 g 68 gew.%iger Harnstofflösung zugefügt. Dann wurden 873 g Wasser abdestilliert. Zu der Lösung wurden 192 g Lösung B zugemischt.

## 3. Verfahrensvariante II

1190 g 40 gew.%ige Formaldehydlösung, 1428 g Harnstoff-Formaldehyd-Vorkondensat, 192 g Harzlösung B, 43 g Ethandiol-1,2, 1141 g 68 gew.%ige Harnstofflösung und 603 g Harz A wurden gemischt und genau analog Beispiel 2 kondensiert.

Vergleichsbeispiel

Hier wurde ein Harnstoff-Formaldehyd-Kondensationsprodukt folgender Zusammensetzung verwendet:

| Harnstoff | 32 Gew.% |
|---|---|
| Formaldehyd | 47 Gew.% |
| Molverhältnis O:F | 1:1,36 |
| Ethandiol-1,2 | 0,9 Gew.% |
| Trockengehalt | 66,5 Gew.% |
| Viskosität bei 90° C | 1100 mPa·s |
| Methylolgruppen | 17,0 Gew.% |
| freier Formaldehyd | 0,35 Gew.% |

Dieses unter der Bezeichnung Kaurit®-Leim 325 fl (BASF) erhältliche Harz ist wegen seiner hohen Viskosität für Flächenverleimungen gut geeignet.

Tabelle 1

|  | Beispiel | | Vergleichsbeispiel |
|---|---|---|---|
|  | 2 | 3 | |
| Formaldehyd % | 30,6 | 30,6 | 32 |
| Harnstoff % | 38,1 | 38,1 | 47 |
| Melamin % | 5,4 | 5,4 | 0 |
| Phenol % | 1,54 | 1,54 | 0 |
| $Na_2SO_3$ % | 0,27 | 0,27 | 0 |
| Ethylenglykol % | 0,96 | 0,96 | 0,9 |
| Viskosität mPa·s | 990 | 990 | 1100 |
| Trockengehalt % | 64,4 | 63,1 | 66,5 |
| Dichte g/cm³ | 1,282 | 1,278 | 1,293 |
| pH-Wert | 9,0 | 9,1 | 8,5 |
| freier Formaldehyd % | 0,25 | 0,42 | 0,35 |
| Hydroximethyl % | 20,0 | 19,1 | 17,0 |
| Wassermischbarkeit | 1:0,7 | 1:0,6 | 1:1,3 |
| 25° C Lagerbarkeit bis zum Erreichen von 2500 mPa·s | 20 Wochen | 42 Wochen | 8 Wochen |
| Gelierzeit b. 100° C s | 47 | 49 | 49 |
| Freier Harnstoff % | 4,4 | 3,9 | 11,0 |

Herstellung von Prüfkörpern

Zu den Aminoharz-Lösungen der Beispiele wurden die in der Tabelle 2 aufgeführten Additive gegeben und daraus 5fache Buchen-Sperrholzplatten von je 1,5 m unter den in der Tabelle 2 angegebenen Herstellbedingungen hergestellt. Die Holzart Buche wurde gewählt, da sie
    a) am schwierigsten zu verleimen ist und
    b) die höchste Gasdurchlässigkeit besitzt.

Somit wurden die schwierigsten Versuchsbedingungen gewählt.

Tabelle 2

| | Beispiel | | Vergleichsbeispiel UF-Harz Molverh. 1:1,35 |
|---|---|---|---|
| | 1 | 2 | |
| Aminoharz | 100 | 100 | 100 |
| Kokosnußschalenmehl | 15 | 15 | 15 |
| Härter: | | | |
| (31 Gew.% Glutarsäure 25 Gew.% Harnstoff 7,5 Gew.% Ammoniak 36,5 Gew.% Wasser) | 10 | 10 | 10 |
| Ammoniumchlorid-Lsg. 98 gew.%ig | 3 | 3 | 3 |
| Weizenmehl | 5 | 5 | 5 |
| Daten: | | | |
| Viskosität bei 20° C mPa•s | 3920 | 3900 | 3230 |
| Leimauftrag g/m² | 200 | 200 | 200 |
| Holzart | 5 x 1,5 mm Buche | | |
| Preßdruck N/mm² | 1,4 | 1,4 | 1,4 |
| Preßzeit bei 100° C | 6 | 6 | 6 |
| Plattenprüfung: | | | |
| *Reißwert trocken N/mm² | 3,97 | 3,75 | 3,86 |
| dabei *Holzfaserriß % | 86 | 47 | 74 |
| Aufstechwert | 1-2 | 1-2 | 2 |
| *Reißwert nach 24 h Wässern N/mm² bei 20° C | 3,72 | 3,08 | 3,43 |
| dabei *Holzfaserriß % | 81 | 31 | 70 |
| Aufstechwert | 1-2 | 1-2 | 2-3 |
| *Reißwert nach 3 h Wässern N/mm² bei 67° C | 3,02 | 2,34 | 2,19 |
| dabei *Holzfaserriß % | 13 | 10 | 0 |
| Aufstechwert | 2-3 | 2-3 | 3-4 |

\* = Mittelwert aus 4 Platten mit je 5 Prüfkörpern
Gasanalysenwert DIN 52 368: (Schmalflächen geschützt)

| | | | |
|---|---|---|---|
| mg HCHO/m² h (2.-4.h) | 1,5 | 2,0 | 4,4 |

Schon bei der Prüfung IF (24 Stunden wässern bei 20° C) zeigt sich beim Aufstechwert der erfindungsgemäßen Harze 1 bis 3 eine verbesserte Note gegenüber dem UF-Harz. Dabei bedeuten

Note 1: 100 %iger Holzbruch (sehr gut)
Note 2: 70 % der aufgestochenen Fläche hat Holzbruch (gut)
Note 3: 35 % der aufgestochenen Fläche hat Holzbruch (genügend)
Note 4: 0 % der aufgestochenen Fläche hat Holzbruch (unzureichend).

Bei der Prüfung nach IW 67 (3 Stunde Wässern bei 67° C) ergibt das UF-Harz eine unzureichende Verleimung, während die erfindungsgemäßen Harze gut sind.

Die Gasanalysenwerte gemäß DIN 52 368, die Formaldehydemission betreffend, zeigen die Überlegenheit der erfindungsgemäßen Harze gegenüber dem UF-Harz.

Ein UF-Harz mit einem Molverhältnis Formaldehyd zu Harnstoff von 1,35:1 und einer Viskosität von 800 mPa•s weist außerdem nur eine Lagerbarkeit von 7 Wochen bei 25° C auf.

Beschichtung einer Bettlatte

Mit der Aminoharz-Lösung des Beispiels 2 wurden gemäß Tabelle 2 gebogene Bettlatten hergestellt, mit der Abweichung, daß 7 Buchenfurniere von 1,2 mm Dicke lang auf lang verleimt wurden. Ein Teil der Bettlatten wurde beschichtet mit dem Ansatz:

150 g/m² Leimflotte, bestehend aus 100 Gew.% Leimharz, 15 Gew.% Weizenmehl und 10 Gew.% Härter. Der Härter war eine Lösung von 12,5 g Ammoniumchlorid und 37,5 g Harnstoff in 50 g Wasser. Die Beschichtung und Pressung der Platte erfolgte gleichzeitig, d.h. die Beschichtungsflotte wurde vor der Pressung zugefügt.

Die Formaldehydabspaltung (Gasanalyse) betrug bei den unbeschichteten Platten 1,9 mg/m²/h, bei den Beschichteten 0,16 mg/m²/h.

## Ansprüche

1. Verfahren zur Herstellung von wäßrigen Aminoharz-Lösungen für formaldehydarme Flächenverleimungen auf Basis von Kondensationsprodukten aus Melamin, Harnstoff, Formaldehyd und einem Phenol-Formaldehyd-Natriumsulfit-Kondensationsprodukt mit einem Molverhältnis von 1,4 bis 1,8 mol Formaldehyd, 0,04 bis 0,1 mol Melamin, 0,015 bis 0,04 mol Phenol und 0,002 bis 0,005 mol Alkalisulfit oder Alkalihydrogensulfit, pro mol Harnstoff, bezogen auf die Gesamtmenge des Aminoharzes, dadurch gekennzeichnet, daß man

I Harnstoff und Formaldehyd oder Harnstoff und ein Harnstoff-Formaldehyd-Vorkondensat
(A) mit einem Melamin-Harnstoff-Formaldehydvorkondensationsprodukt bei pH-Werten von 4,5 bis 6,5 bei Temperaturen von 70 bis 100°C und Reaktionszeiten von 0,3 bis 1 Stunden bis zu einer Viskosität von 800 bis 1200 mPa·s, bezogen auf eine 65 gew.%ige Lösung, kondensiert, die Lösung durch Abdampfen von Wasser auf 60 bis 70 Gew.% aufkonzentriert, und mit
(B) einem Phenol-Formaldehyd-Alkalisulfit-Kondensationsprodukt bei Raumtemperatur mischt oder

II Harnstoff und Formaldehyd oder Harnstoff und ein Harnstoff-Formaldehyd-Vorkondensat
mit (A) und (B) bei pH-Werten von 4,5 bis 6,5 bei Temperaturen von 70 bis 100°C und Reaktionszeiten von 0,3 bis 1 Stunden bis zu einer Viskosität von 800 bis 1200 mPa·s, bezogen auf eine 65 gew.%ige Lösung, kondensiert und die Lösung durch Abdampfen von Wasser auf 60 bis 70 Gew.% aufkonzentriert.

2. Verfahren nach Anspruch 1, dadurch gekennzeichnet, daß man pro mol Harnstoff 1,5 bis 1,7 mol Formaldehyd, 0,05 bis 0,08 mol Melamin und 0,02 bis 0,03 mol Phenol verwendet.

3. Verfahren nach einem der Ansprüche 1 bis 2, dadurch gekennzeichnet, daß man eine Komponente A) verwendet, bei deren Herstellung pro mol Harnstoff 1,6 bis 2,5 mol Melamin und 4 bis 6 mol Formaldehyd verwendet wurden.

4. Verfahren nach einem der Ansprüche 1 bis 3, dadurch gekennzeichnet, daß man eine Komponente B) verwendet, bei deren Herstellung pro mol Phenol 1,7 bis 2,3 mol Formaldehyd und 0,1 bis 0,15 mol Natriumsulfit oder Natriumhydrogensulfit verwendet wurden.

5. Verfahren nach einem der Ansprüche 1 bis 4, dadurch gekennzeichnet, daß man während der Kondensation einen Monoalkohol oder ein Diol mitverwendet.

6. Aminoharz-Lösungen, erhältlich nach einem Verfahren gemäß einem der Ansprüche 1 bis 5.

7. Aminoharz-Lösungen nach Anspruch 6, dadurch gekennzeichnet, daß sie einen Trockengehalt von 60 bis 70 Gew.% aufweisen.

8. Aminoharz-Lösungen nach den Ansprüchen 6 oder 7, dadurch gekennzeichnet, daß sie bei einem Trockengehalt von 65 Gew.% eine Viskosität bei 20°C von 800 bis 1200 mPa·s aufweisen.

9. Verwendung der Aminoharz-Lösungen gemäß einem der Ansprüche 6 bis 8 als Flächenleim zur Herstellung von Sperrholz, Holzformteilen, Türen und furnierten Platten und als Beschichtungsmittel für Holzoberflächen.